# EUROPÄISCHE PATENTSCHRIFT

(11) **EP 3 133 353 B1**
(45) Veröffentlichungstag und Bekanntmachung des Hinweises auf die Patenterteilung: **15.07.2020**
(21) Anmeldenummer: 16176658.9
(22) Anmeldetag: 28.06.2016
(51) Int. Cl.: F24F 6/12, B01D 29/00, C02F 1/00, F24F 6/00, C02F 1/28, C02F 1/42

(54) **WASSERFILTERPATRONE MIT LUFTFÜHRUNG**
WATER FILTER CARTRIDGE WITH AIR FLOW GUIDANCE
CARTOUCHE DE FILTRE A EAU COMPRENANT UN GUIDAGE D'AIR

(30) Priorität: 21.08.2015 DE 102015113888; 23.09.2015 DE 102015116072
(43) Veröffentlichungstag der Anmeldung: 22.02.2017
(73) Patentinhaber: Aquis Wasser-Luft-Systeme GmbH, Lindau, Zweigniederlassung Rebstein, 9445 Rebstein (CH)
(72) Erfinder: Heitele, Bernd, Dr., 9437 Marbach (CH)
(74) Vertreter: Otten, Roth, Dobler & Partner mbB Patentanwälte

(56) Entgegenhaltungen:
- JP-A- 2014 031 968

## Beschreibung

Die vorligende Erfindung betrifft eine Wasserflterpatrone nach dem Oberbegriff des Anspruchs 1.

In Luftbefeuchtern, insbesondere Tischgeräten, wird im Allgemeinen Leitungswasser aus einem Tank fein dispergiert und einem Luftstrom zugeführt, welcher die fein dispergierten Tröpfchen (Nebel) aus dem Gerät trägt. Die eigentliche Verdunstung bzw. Auflösung des Nebels findet dann außerhalb des Geräts statt.

Ein solcher Luftbefeuchtertyp ist zum Beispiel mit einem zur Umgebung nach oben hin geschlossenen Wassertank ausgestattet. Das zur Befeuchtung verwendete Wasser fließt daher nur dann aus dem Tank in das Gerät, wenn dem Wasserverbrauch entsprechend von unten Luft in den Tank steigen kann. Diese Geräte arbeiten ähnlich einer Vogeltränke, wonach das von unten im Gerät anstehende Wasser ein weiteres Auslaufen des Tanks unterbricht, da dieses Wasser den Druckausgleich durch nachströmende Luft verhindert.
Geräte dieser Bauart sind heute weit verbreitet, da eine Regelung des Flüssigkeitsniveaus im Luftbefeuchter auf einfache Weise ohne Ventile und Sensorik mit dem Vogeltränke-Prinzip realisiert ist.
Bedingt durch die Verwendung von Leitungswasser, welches Mineralien enthält, tritt im Betrieb solche Geräte das Problem auf, dass bei der Verdunstung des dispergierten Wassers im Raum die Mineralien im Wasser übrig bleiben und einen gut sichtbaren hellen Staub auf Oberflächen bilden. Zur Vermeidung von diesem hellen Niederschlag, auch "white dust" genannt, kann entsalztes Wasser zur Verdunstung verwendet werden. Besonders angenehm für den Benutzer ist es, einen Filter zur Reduktion des Mineraliengehalts des verwendeten Leitungswassers im Luftbefeuchter zu benutzen, um "white dust" zu vermeiden. Daher gibt es bereits Luftbefeuchtersysteme am Markt, welche mit Entmineralisierungskartuschen ausgestattet sind. Damit sind deutliche Reduzierungen von "white dust" erzielbar.
Die JP 2014 031 968 A offenbart eine Wasserfilterpatrone, mit einem Gehäuse und einem gemeinsamen Strömungspfad für durch die Wasserfilterpatrone aufzubereitendes Wasser und für Luft zur Belüftung eines die Wasserfilterpatrone speisenden, das Wasser bevorratenden Wassertanks, wie sie z.B. für die Verwendung mit Tanks bekannt sind, die nach dem Vogeltränke-Prinzip betrieben werden. Dabei offenbart die JP 2014 031 968 A eine Wasserfilterpatrone gemäß dem Oberbegriff von Anspruch 1.

Dem vorliegenden Patentbegehren wird nun die Aufgabe zugrunde gelegt, den Einsatzbereich von Wasserfilterpatronen, die für den Betrieb in, nach dem "Vogeltränke-Prinzip" arbeitenden Luftbefeuchtern geeignet sind, dahingehend zu erweitern, dass sie in gravimetrisch getriebenen und/oder Unterdruck betriebenen Systemen und in zur Atmosphäre geöffneten Wassertanks effektiv Wasser filtrieren und eine weitere Reduzierung von "white dust" ermöglichen.

Die Lösung dieser Aufgabe erfolgt ausgehend vom Oberbegriff des Anspruchs 1 durch dessen kennzeichnende Merkmale. In den abhängigen Ansprüchen sind zweckmäßige und vorteilhafte Weiterbildungen angegeben.

Dementsprechend weist eine Wasserfilterpatrone ein Gehäuse auf und einen Strömungspfad für Luft zur Belüftung eines die Wasserfilterpatrone speisenden, Wasser bevorratenden Wassertanks. Erfindungsgemäß zeichnet sich eine derartige Wasserfilterpatrone dadurch aus, dass Absperrmittel für den Strömungspfad für Luft vorgesehen sind. Mit solchen Absperrmittel kann der Einsatzbereich einer solchen Wasserfilterpatrone für Luftbefeuchter nach dem Vogeltränke-Prinzip zum Beispiel auch auf solche Geräte ausgedehnt werden, die mit "hydraulisch offenen" Tanks arbeiten, und damit eine massiv weitere Reduzierung von "white dust" bewirkt werden.

Denn, bei geöffnetem Absperrmittel fließt so lange Luft von unten durch den Strömungspfad in einen ansonsten geschlossenen Wassertank, und ein entsprechendes Volumen an von der Wasserfilterpatrone aufzubereitendes Wasser aus dem Tank, bis das Wasserniveau in einem Entnahmebehältnis, auch Tränkebehältnis genannt, so weit wieder angestiegen ist, dass keine Luft mehr unter der Unterkante einer das Vogeltränke-Prinzip realisierenden Trennwand in das System eindringen kann und somit Druckausgleich in dessen Innerem vorherrscht. Weiteres, durch die Wasserfilterpatrone aufbereitetes Wasser kann erst dann wieder nachfließen, wenn ein Weg für weitere Zufuhr von Luft zur Belüftung des Wassertanks durch entsprechendes Absinken des Niveaus im Wasserentnahmebecken eintritt. So lange dieses Tanksystem luftdicht geschlossen ist, kann daher auf keine andere Weise Wasser aus dem System entnommen werden. Die hydraulischen Gegebenheiten zwingen dabei das im Tank bevorratete und durch die Wasserfilterpatrone aufzubereitende Wasser durch die im Gehäuse vorgesehenen Einlassöffnungen für das Wasser über die Filterstrecke hin zum Filterpatronenauslass.

Das erfindungsgemäß vorgesehene Absperrmittel für den Strömungspfad für Luft eröffnet nun die Möglichkeit der Erweiterung des Einsatzbereichs solcher Wasserfilterpatronen. Nämlich dadurch, dass in seinem aktiven Zustand, also bei geschlossenem Strömungspfad für Luft, sichergestellt ist, dass auch für einen bezüglich Luft offenen Wassertank Wasser im Durchfluss durch die Wasserfilterpatrone zuverlässig gefiltert wird. Denn, nach Sperrung des Strömungspfades für Luft, kann mangels eines alternativen Weges das im Tank bevorratete Wasser nur durch den in der Wasserfilterpatrone ausgebildeten Filterpfad fließen. Bei im regulären Betriebszustand am Tankboden angeordneter Wasserfilterpatrone mit Einlass- und Auslassöffnung, deren hydraulisch wirksame Niveaus sich ebenfalls in Tankbodennähe befinden, kann ein solcher Wassertank mit einer erfindungsgemäßen Wasserfilterpatrone sogar vollständig entleert werden.

Zur Einflussnahme auf das Durchflussverhalten sind für diese Betriebsart zwar zusätzliche Regel- und/oder Steuermittel erforderlich. Durch die erfindungsgemäße Wasserfilterpatrone können jedoch in vorteilhafter Weise, aufgrund des Wegfalls des Erfordernisses den betreffenden Wassertank für jede Befüllung jeweils umdrehen zu müssen, Geräte mit vergleichsweise großen Tankvoluminas realisiert werden, die deutlich über 10 Liter liegen können. Damit sind vergleichsweise deutlich erhöhte Betriebszeiten realisierbar. Ein weiterer Vorteil liegt in der Möglichkeit einer einfacheren Handhabung der betreffenden Tanks, zum Beispiel durch wiederholte Zufuhr kleinerer und damit leichter handzuhabender Nachfüllmengen - ohne das Erfordernis einen vollen Tank zu transportieren und "auf den Kopf gestellt" im betreffenden Gerät aufsetzen zu müssen. Durch die erfindungsgemäße Wasserfilterpatrone kann auch für diese hydraulisch völlig verschieden vom "Vogeltränke-Prinzip" arbeitenden "offenen" Systeme eine einwandfreie Entmineralisierung des im Wassertank vorhaltbaren Wasser gewährleistet und "white dust" verhindert werden.

Die Absperrmittel können hierbei in unterschiedlicher Weise realisiert sein. Zum Beispiel in einer ersten Ausführungsform als Ventil, beispielsweise mit Ventilsitz und daran dichtend anlegbarem Ventilkörper. Als besonders vorteilhaft wird es hierbei erachtet, wenn zwischen Ventilsitz und Ventilkörper ein elastisches Dichtelement vorgesehen ist. Damit können einerseits gegebenenfalls vorhandene Unebenheiten und/oder unterschiedliche Spaltbreiten zwischen Ventilsitz und Ventilkörper durch Verformung des elastischen Dichtelementes gegen Leckage abgedichtet werden.

Um eine zuverlässig bleibende Abdichtung eines derartigen Ventils zu bewirken, können in einer weiter vorteilhaften Ausführungsform Halte- oder Festsetzmittel für den Ventilkörper im Ventilsitz vorgesehen werden. In einer kompakten Ausführungsform können diese Mittel gleichzeitig durch das elastische Dichtelement zwischen Ventilsitz und Ventilkörper realisiert sein. Hierzu ist es bevorzugt, wenn der Ventilsitz eine entsprechende Längserstreckung aufweist, sodass darin der elastische Dichtkörper zuverlässig zwischen Ventilsitz und Ventilkörper fixiert werden kann. In einer ersten Variante kann der elastische Dichtkörper dabei am Ventilkörper angeordnet sein und mit diesem entsprechend des gewünschten Betriebszustandes "geöffnet" bzw. "geschlossen" außer Eingriff mit dem Ventilsitz sein bzw. umgekehrt den Ventilkörper im Ventilsitz in fixierender und insbesondere vorteilhafterweise gleichzeitig dichtender Weise positioniert sein. In einer alternativen Ausführungsform kann ein solcher elastischer Dichtkörper zur Fixierung des Ventilkörpers auch im Ventilsitz angeordnet sein. Besonders vorteilhaft werden für solche Dichtkörper O-Ringe angesehen, da diese auch zum Ausgleich gegebenenfalls vorhandener Unebenheiten und Symmetrien hervorragende Eigenschaften aufweist.

In einer alternativen Variante können die Absperrmittel zum Beispiel in der Form einer Membran ausgebildet sein. Eine solche Membran kann beispielsweise in der Form eines flexiblen, insbesondere dünnwandigen oder flachen Körpers realisiert sein, welcher über der Auslassöffnung des Strömungspfades für Luft so angeordnet ist, dass er diese zumindest im unbeeinflussten Zustand verschließt. Beispielsweise kann dieser Körper in Form eines Blättchens oder Lappens realisiert sein, der durch Schwerkraft, in bevorzugter Weise aber auch durch eine ausreichende Eigenspannung gegen die Auslassöffnung des Strömungspfades für Luft gegen Eindringen von Wasser abdichtend, und damit ebenfalls "white dust" verhindernd, anliegt.

Die Verbindung eines derart ausgebildeten Absperrmittels mit dem Gehäuse der Wasserfilterpatrone ist in bevorzugter Weise so ausgebildet, dass der Lappen oder das Blättchen seitlich der Auslassöffnung des Strömungspfades am Gehäuse fixiert ist, sodass bei Beaufschlagung von Druck aus dem Inneren der Wasserfilterpatrone, also vom Strömungspfad für Luft her, das Absperrmittel so weit angehoben werden kann, dass nachströmende Luft aus der Filterpatrone entweichen kann. Dahingegen wird an der Außenseite des Gehäuses der Wasserfilterpatrone anstehendes Wasser vor Eindringen in den Strömungspfad für Luft durch das Absperrmittel gehindert. Hierzu kann einerseits die aus dem Strömungspfad entweichende Luft einen entsprechenden Widerstand für Wasser gegen Eindringen aufbauen. Andererseits erzeugt an der Außenseite anstehendes Wasser entsprechend zusätzlichen Druck auf das Absperrmittel, sodass es dieses selbst in zusätzlich die Dichtwirkung erhöhender Weise gegen dessen komplementäre Anlagefläche an der Außenseite des Gehäuses der Filterpatrone abdichtend drückt. Insbesondere wenn keine Luft aus dem Strömungspfad aufsteigt.

In einer weiter bevorzugten Ausführungsform können Sicherungsmittel und/oder Rückstellmittel für die Absperrmittel vorgesehen sein. Solche Sicherungsmittel können verhindern, dass die Absperrmittel für den Strömungspfad versehentlich geöffnet werden. Durch Rückstellmittel können beispielsweise deaktivierte Absperrmittel wieder aktiviert werden. Wenn beispielsweise die Absperrmittel in der Form eines Ventils realisiert sind, kann dieses durch die Sicherungs- und/oder Rückstellmittel entsprechend in einem geschlossenen Zustand gehalten und/oder in diesem zurückgeführt werden.

Durch Vorsehen elastischer Eigenschaften für die Sicherungs- und/oder Rückstellmittel können diese dem Absperrmittel für den Strömungspfad für Luft zum Beispiel eine Positions- und/oder Funktionsvariabilität ermöglichen, insbesondere für die Absperrmittel. Wenn die Sicherungs- und/oder Rückstellmittel ein Federelement umfassen, so kann dieses mit entsprechender Vorspannung beaufschlagt, das Absperrmittel im aktivierten Zustand halten. Ein Ventil wäre demgemäß geschlossen. Derartig ausgebildete Rückstellmittel würden ein geöffnetes Ventil, nach Wegfall der zur Öffnung des Ventils erforderlichen Kräfte, dieses wiederum in seinen geschlossenen Zustand zurückführen. Damit kann in vorteilhafter Weise eine automatisierte Betriebsfunktionalität für die Wasserfilterpatrone realisiert werden. Das heißt, es kann ohne Beaufschlagung entsprechender Deaktivierungskräfte für die Absperrmittel, ein Betriebszustand für die Verwendung der Wasserfilterpatrone in einem offenen Wassertank gewährleistet werden.

Für Absperrmittel in der Form einer Membran kann zum Beispiel eine Deckfolie, insbesondere eine selbsthaftende, als Sicherungsmittel vorgesehen werden, oder eine ablösbare Klebeschicht oder ein entfernbarer stabiler Abdeckkörper oder dergleichen, die Membran in der Sperr-Betriebsart zusätzlich fixierende Sicherungsmittel.

Zur Gewährleistung, dass dieselbe Wasserfilterpatrone auch ordnungsgemäß in einem geschlossenen Wassertank, insbesondere einem luftdicht geschlossenen Wassertank arbeitet, welcher nach dem "Vogeltränke-Prinzip" entleerbar ist, können in einer weiter bevorzugten Ausführungsform Öffnungsmittel für die Absperrmittel vorgesehen sein. Diese können dafür sorgen, dass bei Einsetzung der Wasserfilterpatrone die Absperrmittel entsprechend deaktiviert werden. Wenn diese zum Beispiel durch ein Ventil realisiert sind, können die Öffnungsmittel dafür sorgen, dass das Ventil geöffnet wird. Vorzugsweise kann dazu eine mechanisch Druck übertragende Struktur vorgesehen sein. Eine solche kann beispielsweise in Form eines Stößels realisiert sein, welcher in Öffnungsrichtung auf das Ventil einwirken kann. Dies beispielsweise dadurch, dass beim Anschluss der Wasserfilterpatrone an den betreffenden Tankanschluss vorzugsweise die Stirnseite des Stößels an eine Mechanik anstößt, die ihrerseits beim Aufsetzen des Wassertanks auf das betreffende Gerät ebenfalls in die Richtung versetzt wird, in welcher das den Strömungspfad für Luft verschließende Ventil zu öffnen ist. Bevorzugt handelt es sich bei dieser tankseitigen Struktur gleichzeitig um das Tankauslassventil, welches seinerseits beim Aufsetzen des Tanks auf das Gerät geöffnet wird. Damit kann sichergestellt werden, dass für diesen Fall, und nur für diesen Fall, die Wasserfilterpatrone automatisch in dem Betriebszustand betrieben wird, der für einen geschlossenen Tank vorgesehen ist, nämlich mit frei geschaltetem Strömungspfad für Luft zur Belüftung des von der Wasserfilterpatrone aufzubereitenden Wassers enthaltenden Wassertanks.

In einer weiter bevorzugten Ausführungsform kann der Strömungspfad für Luft eine erste Wassersperre aufweisen, insbesondere gegen stromabwärts fließendes Wasser. Damit kann verhindert werden, dass im Filterbetrieb Wasser, anstelle über das Filterbett, unfiltriert über den Strömungspfad für Luft zur Belüftung des Wassertanks austreten und bei Verdunstung "white dust" bilden kann. Diese erste Wassersperre kann vorzugsweise in der Form einer Abblasöffnung ausgebildet sein. Über diese kann Luft zum Druckausgleich in den Tank entweichen. Diese Öffnung ist so klein ausgebildet, dass im Strömungspfad befindliche Luft außen anstehendes Wasser aufgrund der diesem inhärenten Oberflächenspannung vom Eindringen abhält. Insbesondere bevorzugt kann die Abblasöffnung dabei eine lichte Weite < 6 mm und > 0,5 mm aufweisen.Insbesondere bevorzugt 1 mm ± 0,25 mm.

Weiter bevorzugt kann die Wassersperre auch eine Luftsammelkammer umfassen. Eine solche kann beispielsweise in Strömungsrichtung direkt vor der Abblasöffnung ausgebildet sein. Damit kann in vorteilhafter Weise ein ausreichend großes Luftpolster im Bereich der Abblasöffnung zur Verfügung gestellt werden, sodass auch bei Austritt von Luft durch die Abblasöffnung, in Strömungsrichtung vor der Abblasöffnung im Filterbetrieb der Wasserfilterpatrone stets noch weitere Luft vorgehalten ist, die zuverlässig ein Eindringen von Wasser verhindert. In bevorzugter Weise kann die Luftsammelkammer eine ringförmig ausgebildete Querschnittskontur aufweisen. Damit kann eine gute Anpassung der wirkungsrelevanten Geometrien im Hinblick auf die Vermeidung von Wasserdurchtritt aufgrund der vorherrschenden Oberflächenspannung realisiert werden.

Die Realisierung einer Luftsammelkammer mit ringförmig ausgebildeter Querschnittsstruktur kann beispielsweise dadurch verwirklicht werden, dass die Kammer an sich etwa zylinderförmig ausgebildet ist, in deren Mitte der Stößel zur Betätigung des Ventils hindurch geführt ist und damit ein ringförmig freibleibendes Volumen in der Kammer definiert.

Diese Luftsammelkammer kann von einer um den Stößel herum ausgebildeten, radial bis zur zylindrischen Innenwandung der Luftkammer reichenden Schulter oder Scheibe in Strömungsrichtung nach außen hin begrenzt sein. Zur Ausbildung der Abblasöffnung mit entsprechenden Geometrien kann in weiter vorteilhafter Weise zum Beispiel in der Schulter oder Scheibe oder auch Ringschulter genannt eine Aussprung in einem Segment zur Realisierung der Abblasöffnung ausgebildet sein.

Zur Führung der Luft zur Belüftung des Wassertanks entlang des Strömungspfads für Luft kann dieser in weiter bevorzugter Weise ein erstes Leitelement zur Leitung des Luftstromes umfassen. Dieses kann beispielsweise bevorzugt in der Form einer rohrartigen Struktur ausgebildet sein. Damit kann einerseits nachfolgende Luft in Richtung der Luftsammelkammer gelenkt und andererseits der Zufluss von Wasser in diesem Bereich unterbunden werden.

Durch Ausbildung eines konischen Abschnittes in diesem ersten Leitelement entlang des Strömungspfades für Luft kann darin angesammeltes, insbesondere initial bei Inbetriebnahme angesammeltes Wasser auslaufen und eine Stau- und Sammelwirkung für Luft entlang des Strömungspfades auch bereits vor der Luftsammelkammer realisiert werden.

In einer überdies bevorzugten Ausführungsform kann der Strömungspfad eine zweite Wassersperre gegen aufsteigendes Wasser aufweisen. Mit dieser kann bei Ausbildung einer Wassersäule im Strömungspfad von der Auslaufseite des Wassers aus dem Filterbett her einen inneren Wasserdurchbruch zur Abblasöffnung, und damit einen Kurzschluss der Wasserfilterpatrone verhindert werden. Vorzugsweise ist diese zweite Wassersperre in der Form eines Abschnitts des Strömungspfades realisiert, welcher gegenüber einem im Betriebsfall in Strömungsrichtung davor ausgebildeten Abschnitt des Strömungspfades einen reduzierten Leitungsquerschnitt aufweist. Insbesondere bevorzugt kann die zweite Wassersperre eine gestuft ausgebildete Verengung im Querschnitt des Strömungspfades umfassen. Damit kann auch adhäsionsbedingte Kriechwirkung von sich gegebenenfalls ansammelnden Wasser gezielt unterbunden werden. Eine derartige Verengung kann zum Beispiel in der Form einer zylinderartigen Hülse realisiert sein, die beispielsweise im ersten Leitelement zur Leitung des Luftstroms angeordnet ist. Beispielsweise in der Form einer Steckhülse, insbesondere einer am Gehäusedeckel angeordneten, welche in die Stirnseite der rohrartigen Struktur eingeführt und diese im Querschnitt abgestuft reduzierend positioniert ist.

Vorzugsweise kann dieses Element durch die Wandung der Luftsammelkammer realisiert sein. Durch die Ausbildung einer radial nach außen gerichteten Schräge an der Stirnseite dieser zylinderförmigen Hülse kann eine weitere Erhöhung des Kriech- bzw. Fließwiderstandes für Wasser aufgrund der oberflächenspannungsbedingten Sammelwirkung in der dadurch gegenüber der Innenwandung des ersten Teilelementes für Luft entstehenden Ringnut zur Verhinderung des Aufsteigens von Wasser realisiert werden.

Des Weiteren kann, zur Ableitung von sich bei Inbetriebnahme im ersten Leitelement zur Leitung des Luftstroms ansammelnden Wasser, der Strömungspfad für Luft in einer weiter bevorzugten Ausführungsform ein zweites Leitelement zur Ausleitung von Wasser umfassen, zum Beispiel in Form einer Ablaufrippe. Diese kann insbesondere bevorzugt einen in Betriebslage der Wasserfilterpatrone vertikal ausgerichteten Abschnitt aufweisen. Auch damit kann zum einen ein initiales Leerlaufen von Wasser aus dem Strömungspfad für Luft erzielt werden. Und damit eine Kurzschlussunterbrechung durch Abriss dieses zum Filterpfad initial verursachten Bypasspfades. Zum anderen kann auch in weiter vorteilhafter Weise bei Entstehung von Wassertröpfchen im ersten Leitelement zur Leitung des Luftstroms bei entsprechender Zunahme der Tropfengröße ein gravitationsbedingtes automatisches Ablaufen bewirkt werden.

In weiter bevorzugter Weise kann die Wasserfilterpatrone eine Wassereinlassöffnung, bezogen auf den Betriebsfall, im unteren Zehntel der Höhenerstreckung des Gehäuses der Wasserfilterpatrone umfassen. Dadurch kann in vorteilhafter Weise sichergestellt werden, dass ein mit einer solchen Wasserfilterpatrone bestückter Wassertank zumindest ganz entleert werden kann.

Durch die Ausbildung einer Einbuchtung in dem Deckelbereich des Gehäuses, in welchem die den Tank belüftende Luft aus der Wasserfilterpatrone austritt, kann eine sogenannte "Luftfalle" realisiert werden, in welcher Luftblasen bis zur Erreichung einer bestimmten Größe bevorzugt an der Außenseite der Abblasöffnung und dem diese umgebenen Bereich haften bleiben. Hierdurch kann in weiter vorteilhafter Weise ein zusätzlicher Schutz gegen Eindringen von Wasser durch die Abblasöffnung während des Filterbetriebs zur Verfügung gestellt werden.

Ein weiterer Vorteil einer derartigen, stirnseitig ausgebildeten Einbuchtung liegt in dem dadurch zur Verfügung stellbaren mechanischen Schutz in Form des gegenüber der äußeren Umrandung der Einbuchtung tiefer liegenden Dichtungsbereichs zwischen dem Gehäuse der Wasserfilterpatrone und einer Wassersperre und/oder einem Absperrmittel zur Verhinderung des Eindringens von Wasser in die Wasserfilterpatrone. Des Weiteren kann mittels dem die Einbuchtung umgebenden Einbuchtungsrand auch eine zuverlässig stabile Abstellfläche für die Wasserfilterpatrone zur Verfügung gestellt werden. Insbesondere vorteilhaft kann sich dies bei der Montage der Filterpatrone an den betreffenden Tankdeckel dadurch auswirken, dass diese nicht wegrollen kann.

Eine außenseitige Abrundung des Gehäuses im Bereich des sogenannten Deckels der Wasserfilterpatrone, wie z.B. in der Form einer halbkugelartigen Struktur oder dgl., zwischen dem Einbuchtungsrand und dem übrigen Gehäuse, z.B. einem hülsenartigen Abschnitt des Gehäuses, kann durch die damit bewirkte Reduzierung des Außenvolumens für die Wasserfilterpatrone in vorteilhafter Weise eine Vergrößerung des nutzbaren Tankinhalts für das darin zu bevorratende Wasser bewirkt werden. Ein weiterer Vorteil kann damit an Hand der ergonomischen Form in einer besseren Handhabung der Filterkartusche für Montage- und Demontagezwecke erzielt werden.

### Figuren

Unter Bezugnahme auf die schematischen Darstellungen in den Figuren werden nachfolgend weitere Vorteile und Einzelheiten näher erläutert. Im Einzelnen zeigen:
- Figur 1: schematisch eine Schnittdarstellung entlang eines Längsschnittes durch eine erfindungsgemäße Wasserfilterpatrone gemäß einer ersten Betriebsart mit darin eingezeichnetem Strömungspfad für Luft zur Belüftung eines geschlossenen Wassertanks (Doppelpfeil) und des Strömungsverlaufs für durch die Wasserfilterpatrone zu filterndes Wasser (Einfachpfeile),
- Figur 2: ebenfalls schematisch eine Schnittdarstellung einer erfindungsgemäßen Filterpatrone
- Figur 3: wiederum schematisch eine Schnittdarstellung entlang eines Längsschnittes durch eine erfindungsgemäße Wasserfilterpatrone entsprechend einer zweiten Betriebsart,
- Figur 4: eine schematische Schnittdarstellung eines horizontalen Schnittes durch die Wasserfilterpatrone gemäß III in der Figur 1,
- Figuren 5 und 6: wiederum beispielhaft und schematisch eine Wasserfilterpatrone mit einer alternativen Ausführungsform einer Absperrvorrichtung für den Strömungspfad zur Belüftung eines geschlossenen Wassertanks (Figur 5 geöffnet und Figur 6 geschlossen) und

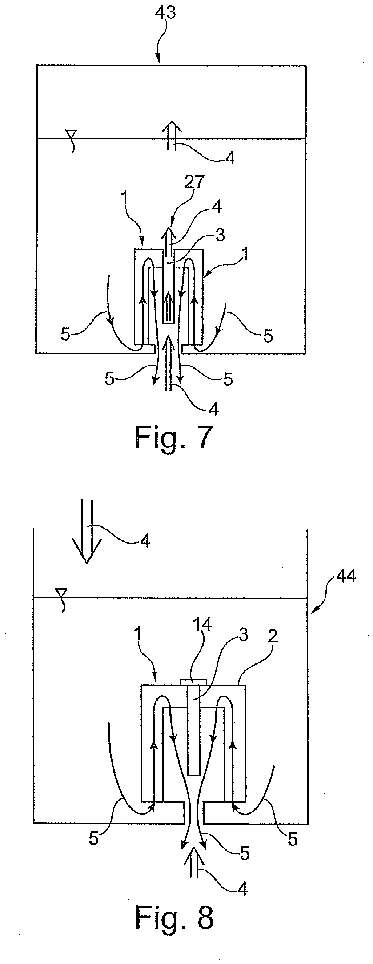

- Figuren 7 und 8: zwei verschiedene Betriebsarten für die Wasserfilterpatrone, bei welcher diese in Figur 7 in einem luftdicht geschlossenen Tank eingesetzt ist, welcher nach dem "Vogeltränke-Prinzip" Wasser durch die Wasserfilterpatrone aufbereitend abgibt, wobei Luft zur Belüftung des Tanks durch den Strömungspfad für Luft zur Belüftung des Tanks durch die Patrone hindurch in den Tank strömt, wohingegen in der Darstellung der Figur 8 der Strömungspfad für Luft verschlossen ist und der Tank von oberhalb des Wassers her belüftet ist und dadurch für Druckausgleich gesorgt ist, sodass das Wasser durch das in der Wasserfilterpatrone befindliche Filterbett zum Auslass hinströmen muss
und
- Figuren 9 und 10: eine gegenüber den Figuren 1-3 abgewandelte weitere, beispielhafte Ausführungsform einer Wasserfilterpatrone.

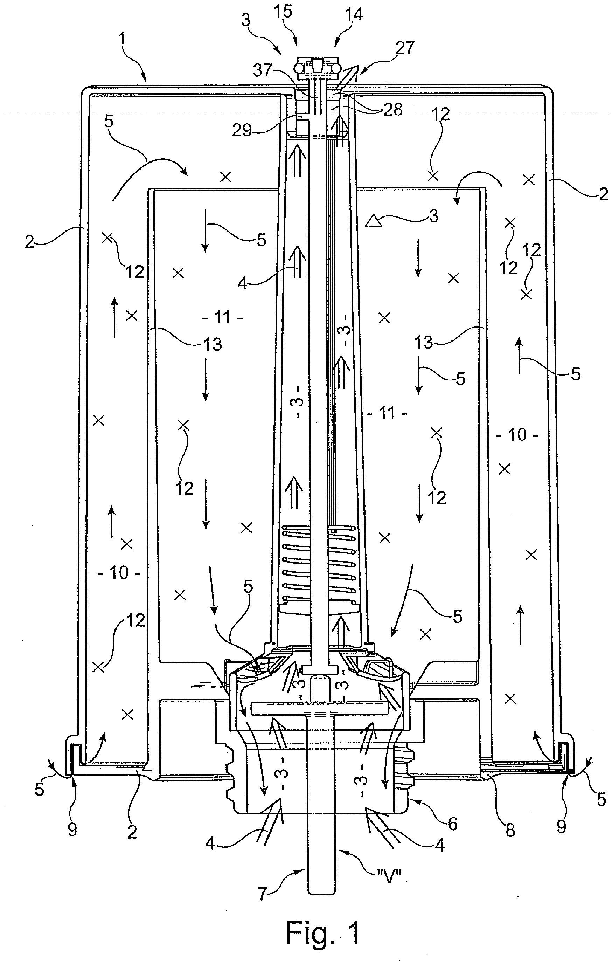

Demgemäß zeigt die Figur 1 eine Wasserfilterpatrone 1 mit einem Gehäuse 2 und einem Strömungspfad 3 für Luft 4 (Doppelpfeile) zur Belüftung eines von der Wasserfilterpatrone aufzubereitendes Wasser 5 bevorratenden, luftdicht geschlossenen Wassertanks (nicht dargestellt). Die Wasserfilterpatrone 1 kann mittels eines Anschlusses 6 am Verschlussdeckel einer Einfüllöffnung des Wassertanks so angeordnet werden, dass diese nach Verschluss des befüllten Wassertanks mit dem Verschlussdeckel sich im Inneren des luftdicht geschlossenen Wassertanks befindet.

Zur Versorgung des das im Wassertank bevorrateten Wasser weiter verarbeitenden Gerätes, zum Beispiel eines Luftbefeuchters, wird der Tank umgedreht und auf eine entsprechende Aufnahme des Gerätes aufgesetzt. Dabei öffnet ein Tankverschluss 7 die Tankauslassöffnung (nicht dargstellt). Daraufhin tritt so lange Wasser aus dem Wassertank aus und Luft zur Belüftung des Wassertanks durch die gleiche Öffnung in den Strömungspfad 3 ein, bis Druckausgleich im Inneren des Wassertanks vorliegt. Dies ist dann der Fall, wenn ein vom Tankwasser gespeistes Getränkebehältnis eines auf dem "Vogeltränke-Prinzip" beruhenden Wasserstandsreguliermechanismus so weit befüllt ist, dass keine Luft mehr unter einer betreffenden Trennwand zur Belüftung des Tanksystems in den ansonsten luftdicht geschlossenen Wassertank eindringen kann.

In der in der Figur 1 dargestellten Ausführungsform weist der Anschluss 6 ein Schraubgewinde auf, mittels welchem die Wasserfilterpatrone so weit aufgeschraubt werden kann, bis eine radial davon außerhalb liegend am Boden des Gehäuses 2 angeordnete Dichtung 8 den Tankinnenraum über das Gehäuse 2 der Wasserfilterpatrone 1 luft- und wasserdicht gegenüber dem Tankauslass abdichtet.

Sobald nun Luft 4 nachströmt, steigt diese im Strömungspfad 3 auf, sodass zur Herstellung des Druckausgleichs das durch die Wasserfilterpatrone aufzubereitende Wasser 5 gezwungen ist, über die Einlassöffnungen 9 im Filtergehäuse 2 der Wasserfilterpatrone 1 in diese einzudringen und das Filtermedium 12 zu durchströmen und dabei von diesem aufbereitet zu werden. Vorzugsweise ist dieses Filtermedium in der Form von Ionentauscherharz realisiert und kann insbesondere vorteilhaft durch ein weiteres, seriell im Durchflussstrom des aufzubereitenden Wassers angeordnetes Filtermaterial, zum Beispiel Aktivkohle (hier aus Vereinfachungsgründen nicht dargestellt) ergänzt sein. In der hier beispielhaft dargestellten Ausführung gemäß der Figur 1 ist zur Verlängerung der Filterstrecke innerhalb des Gehäuses 2 eine Trennwand 13 angeordnet, sodass dadurch zwei Filterkammern, Filterkammer 10 im Aufstrombetrieb und Filterkammer 11 im Abstrombetrieb, für das aufzubereitende Wasser ausgebildet sind.

Erfindungsgemäß sind Absperrmittel 14 für den Strömungspfad 3 für Luft 4 an der Wasserfilterpatrone 1 ausgebildet. Damit kann ein luft- und wasserdichter Verschluss der Filterpatrone realisiert werden. Vorzugsweise sind diese Verschlussmittel, wie in der Figur 1 dargestellt, in der Form eines Ventils 15 ausgebildet.

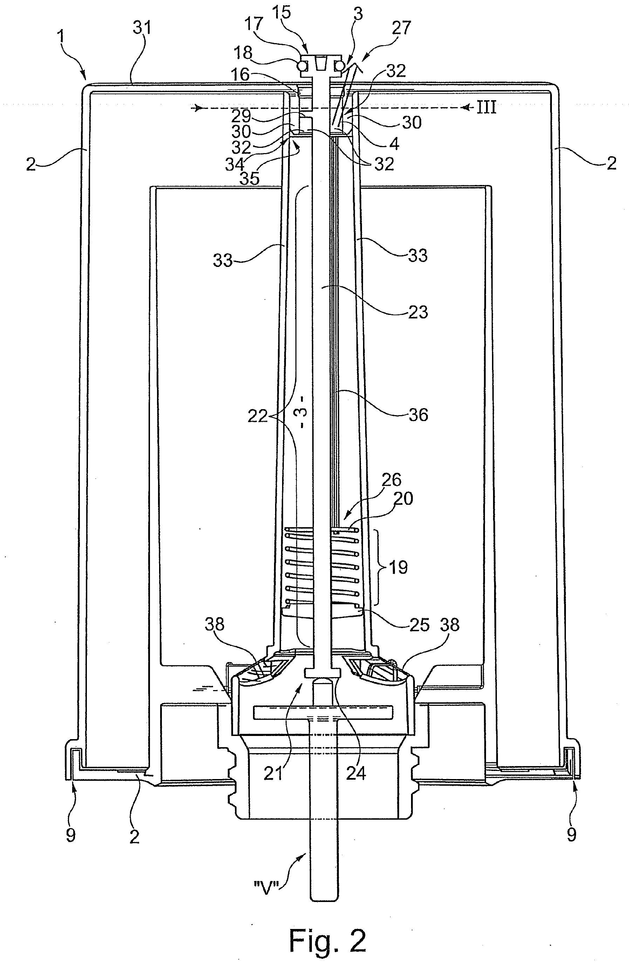

Unter Bezugnahme auf die Figur 2 umfasst dieses Ventil 15 einen am Gehäuse 2 ausgebildeten Ventilsitz 16, einen Ventilkörper 17 und eine Dichtung 18, welche hier beispielhaft in Form eines Dichtringes realisiert ist.

Die erfindungsgemäß vorgesehenen Absperrmittel 14 eröffnen durch den damit möglichen luft- und wasserdichten Verschlusses der Wasserfilterpatrone die Möglichkeit, in unerwarteter Weise eine mit der hydraulischen Funktionalität zur Aufbereitung von in einem luftdicht geschlossenen Tank vorgehaltenen Wasser, welches mittels dem "Vogeltränke-Prinzip" diesem entnommen wird, auch in einem physikalisch hiervon völlig verschiedenen Versorgungskonzept in der Form eines offenen Wassertanks ebenfalls funktionstüchtig zu betreiben.

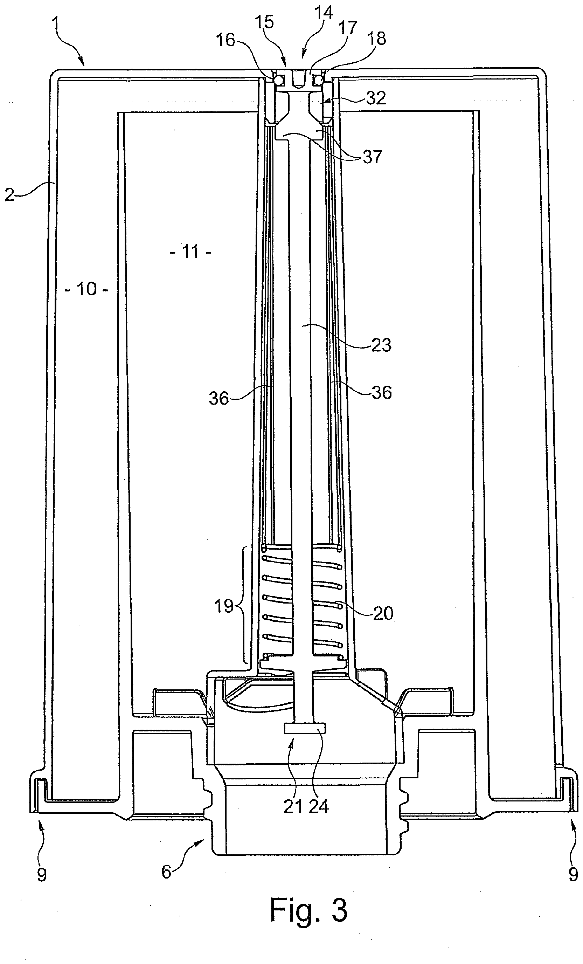

Dies deshalb, da der für den Durchfluss des aufzubereitenden Wassers vorgesehene Fließweg durch die Einflussnahme auf den Strömungspfad 3 für Luft 4 hiervon unberührt bleibt. Ein andernfalls durch den Strömungspfad 3 zum Filterpfad durch die Filterkammern 10, 11 möglicher Bypass für das im Tank bevorratete Wasser ist somit zuverlässig verschlossen (vgl. Figur 3).

Somit kann in vorteilhafter Weise eine bezüglich einer bestimmten Anforderung zur Wasseraufbereitung spezifizierte Art von Filterpatronen für unterschiedliche Geräte zur Verfügung gestellt werden, die zwar den gleichen Anwendungszweck verfolgen, zum Beispiel Luftbefeuchtung, mit einem speziell hierauf abgestimmten Filtermedium, die jedoch auf verschiedenen hydraulischen Wirkprinzipien basieren - "Vogeltränke-Prinzip" mit luftdicht geschlossenem Wasser-Vorratstank, bzw. aktiv geregelte Wasserentnahme, zum Beispiel mit einem gesteuerten Ventil und/oder einer Saugpumpe, mit einem bezüglich Luftzufuhr offenen Wassertank -.

Durch die Bereitstellung eines Sicherungsmittels 19, das zum Beispiel den Öffnungswiderstand für die Absperrmittel 14 erhöhen kann, kann ein versehentliches Öffnen der Absperrmittel 14 für den Strömungspfad 3 für Luft in einer die Zuverlässigkeit dieser Funktion erhöhender Weise erzielt werden. Durch das Vorsehen von Rückstellmittel 20 können die Absperrmittel 14 in die Betriebsart der Wasserfilterpatrone automatisch rückstellender Weise im deaktivierten Zustand, also bei geöffnetem Strömungspfad 3, wieder aktiviert und der Strömungspfad 3 für Luft geschlossen werden. Beispielhaft hierfür ist in der Figur 3 ein Rückstellmittel 20 mit elastischen Eigenschaften dargestellt, in der Form eines zwischen zwei Anschlägen eingespannten Federelementes. Die im eingespannten Zustand im Rückstellmittel vorherrschende Grundspannung hält das Ventil in geschlossener Stellung. Im geöffneten Zustand des Ventils, gemäß der Darstellung der Figur 2, ist die Feder komprimiert und übt, bei entsprechend freigegebenem Weg, eine Rückstellwirkung auf das Ventil aus, sodass dieses wieder in die Position gemäß der Darstellung der Figur 3 zurückkehrt.

Durch die Bereitstellung von Öffnungsmitteln 21 für die Absperrmittel 14 kann die Wasserfilterpatrone 1 automatisch auf die Betriebsart für die Verwendung in einem geschlossen Wassertank - "Vogeltränke-Prinzip" - umgestellt werden. In den in den Figuren 2 und 3 dargestellten Ausführungsformen sind diese Öffnungsmittel in der Form einer mechanischen Struktur 22 realisiert, die hier insbesondere in der Form eines Stößels 23 umgesetzt ist.

Dieser Stößel ist entlang einer Verbindungslinie zwischen dem Anschluss 6 der Wasserfilterpatrone 1 und dem in Form eines Ventils 15 ausgebildeten Absperrmittel 14 für den Strömungspfad für Luft ausgerichtet. In den Figuren 1 und 2 steht im Bereich des Anschlusses 6 eine Stirnseite 24 des Stößels 6 an einer Stirnseite eines Verschlusselementes "V" des nicht dargestellten, mit Ausnahme der Anschlussöffnung luftdicht geschlossenen Wassertanks an. In der Figur 2 dargestellten Situation drückt dieses Verschlusselement "V" den Stößel 23 gegen die Federkraft des Sicherungsmittels 19, bzw. des Rückstellmittels 20, welche in dieser beispielhaften Ausführungsform durch das dargestellte Federelement in der Form einer Spiralfeder realisiert sind, so weit nach oben, dass das Ventil 15 geöffnet ist. Diese Spiralfeder liegt einerseits auf einer Stößelschulter 25 sich abstützend auf und ist mit ihrem gegenüberliegenden axialen Ende an einem Lager 26 so abgestützt, dass bei einem freiliegendem Stößel das Ventil 15 wie in der Darstellung gemäß Figur 3 geschlossen ist.

Wie in der Darstellung der Figur 2 gezeigt, weist der Strömungspfad 14 für Luft eine erste Wassersperre 27 auf. Diese ist im vorliegenden Beispiel in Form einer Abblasöffnung 28 ausgebildet (siehe Figur 3), welche insbesondere bevorzugt eine lichte Weite < 6 mm und > 0,5 mm aufweist, insbesondere bevorzugt 1 mm ± 1,25 mm. Die Abblasöffnung 28 ist als Aussparung an einer am Stößel 23 radial nach außen stehend ausgebildeten Ringschulter in Strömungsrichtung vor dem Ventilsitz 16 ausgebildet. Eine vom Deckel 31 des Gehäuses 2 in etwa zentral nach unten ragende zylindrische Hülse 30 umschließt diese Ringschulter 29, sodass dadurch eine Luftsammelkammer 32 ausgebildet ist. In dieser kann sich vom Anschluss 6 her in die Wasserfilterpatrone eintretende Luft sammeln und ein Luftpolster ausbilden. Aufgrund der dem Wasser innewohnenden Oberflächenspannung und der entsprechenden geometrischen Abmessungen kann kein von außen her auf der Abblasöffnung 28 anstehendes Wasser aus dem Wassertank durch die Abblasöffnung 28 hindurch in den Strömungspfad 3 für Luft zur Belüftung des Wassertanks eindringen. Durch die Ausbildung der Luftsammelkammer 32 mit einer ringförmigen Querschnittsstruktur, die dadurch realisiert ist, dass der Stößel 23 zentral durch die Kammer geführt ist, kann die Dichtwirkung durch die in Strömungsrichtung betrachtet vor der Abblasöffnung 28 als Luftpolster gesammelte Luft zumindest auf den Raumbereich die Dichtwirkung unterstützend ausgedehnt werden, der innerhalb der Hülse 30 bei geöffnetem Ventil 15 entsprechend der diesbezüglichen geometrischen Strukturen zur Verfügung steht.

Um eine definierte Führung des Strömungspfades 14 zu ermöglichen, ist in weiter vorteilhafter Weise ein erstes Leitelement 33 zur Leitung der vom Anschluss 6 hier aufsteigenden Luft 4 vorgesehen. In der hier gezeigten beispielhaften Ausführungsform als rohrartige Struktur. Zur Verhinderung des Aufsteigens von Wasser zur Ausbildung einer Wassersäule ist diese zumindest abschnittsweise konisch ausgebildet. Die Querschnittsreduzierung des Rohres verläuft dabei in Richtung vom Anschluss 6 hin zu der Stelle, an welcher die Hülse 30 eingesetzt ist.

Zur weiteren Verhinderung des Aufsteigens von Wasser in die Luftsammelkammer 32 weist der Strömungspfad 14 eine zweite Wassersperre 34 auf. Diese ist durch einen Abschnitt des Strömungspfades realisiert, welcher einen gegenüber einen in Strömungsrichtung davor ausgebildeten Abschnitt sprungartig reduzierten Leitungsquerschnitt aufweist.

In der in den Figuren 1 bis 3 beispielhaft dargestellten Ausführung ist diese zweite Wassersperre durch die gestuft ausgebildete Verengung im Querschnitt des Strömungspfades zwischen dem ersten Leitelement für Luft und der in ihr eingesetzten Hülse 30 realisiert. Radial außen liegende Anschrägungen an der Stirnseite der Hülse 30 bilden dabei zusätzlich einen Fließwiderstand für sich innerhalb des ersten Leitelementes 33 für Luft ansammelndes Wasser aus. Dieses kann somit nicht über diese Sperre hinweg nach oben wandern und im ungünstigsten Fall einen Wasserdurchbruch an der Abblasöffnung verursachen.

Bei Erreichen einer bestimmten Größe rinnt der betreffende Wassertropfen aus gravimetrischen Gründen an der Innenwand des Leitelementes 33 zur Leitung der Luft 4 nach unten in Richtung Anschluss 6. Zur Unterstützung dieser Ablaufeigenschaft kann in weiter vorteilhafter Weise ein zweites Leitelement 36 zur Ausleitung von Wasser angeordnet sein. In der dargestellten Ausführungsform ist dies bevorzugt als Ablaufrippe realisiert. Diese weist insbesondere vorteilhaft in Betriebslage der Wasserfilterpatrone einen vertikal ausgerichteten Abschnitt auf, um möglichst früh einen Ablaufeffekt für daran anhaftende Wassertröpfchen zu bewirken.

Zur Verhinderung von Eintritt von Wassertröpfchen in die Luftsammelkammer 32 endet die Ablaufrippe in Strömungsrichtung betrachtet vor der Luftsammelkammer. In Richtung Anschluss 6 kann die Struktur dieser Ablaufrippe zur Abstützung des Sicherungsmittels 19 oder des Rückstellmittels 20 für die Absperrmittel 14 als Lager 26 herangezogen werden. Durch die Ausbildung mehrerer Ablaufrippen 23 ist zusätzlich eine mehrere Lagerpunkte 26 umfassende Abstützung der Sicherungs- und/oder Rückstellmittel möglich, zusätzlich zu einer erhöhten Ablaufwirkung entsprechend Anzahl der im Strömungspfad 3 ausgebildeten Ablaufrippen.

Durch die Ausbildung einer Wassereinlassöffnung 9, bezogen auf den Betriebsfall im unteren Zehntel der Höhenerstreckung des Gehäuses 2 der Wasserfilterpatrone 1, kann sichergestellt werden, dass der betreffende Wassertank sehr gut entleert werden kann. Bei Anordnung der Wassereinlassöffnung 9 unmittelbar auf Höhe der Dichtung 8, bzw. so weit im Niveau über dieser liegend, dass das durch die Filterpatrone aufzubereitende Wasser noch unter das Gehäuse der Filterpatrone einfließen kann, ist sogar eine vollständige Entleerung des betreffenden Wassertanks gewährleistet.

Damit gehen mit dieser erfindungsgemäßen Wasserfilterpatrone die Vorteile einher, dass die Luft zum Druckausgleich ungehindert aus dem Gerät in dem Tank aufsteigen kann, wenn es sich um eine "Vogeltränke-Prinzip" Wasserentnahmeregelung handelt. Das Wasser 5 kann dabei nur über den Filtrationsweg des Wasserfilters in das an den Tank angeschlossenen Gerät gelangen. Der Belüftungsweg für den Tank durch den Wasserfilter ist während des Filterbetriebs für das Wasser verschlossen, da dieses nicht durch die Abblasöffnung 32 eindringen kann.

Durch das erfindungsgemäße Absperrmittel 14 zum Verschluss des Strömungspfads 3 für Luft 4 zur Belüftung eines geschlossenen Wassertanks kann diese Wasserfilterpatrone 1 auch für Geräte verwendet werden, die mit einem, bezogen auf die Luftzufuhr, offenen Wassertank ausgestattet sind, also mit einem hydrostatisch betrachtet völlig anderen System arbeiten, als die "Vogeltränke-Prinzip" Wasserstandsregelungen.

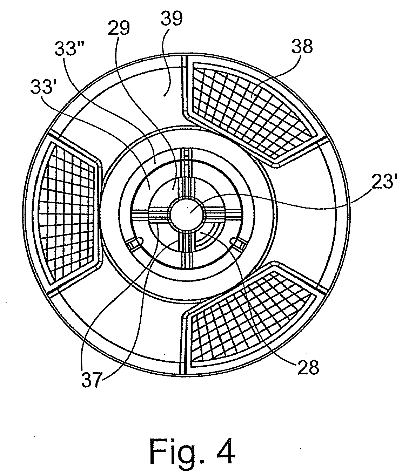

Die Figur 4 zeigt schließlich einen Ausschnitt einer Schnittdarstellung gemäß eines Horizontalschnittes "III" in der Figur 2. Zentral in der Mitte ist der Schnitt durch den Stößel 23 als Kreisfläche 23' dargestellt. Radial nach außen hin ist dieser von der Ringschulter 29 ringförmig umrandet, in welcher beispielhaft die Abblasöffnung 28 als Austrittsöffnung für die aus der Luftsammelkammer 32 zur Belüftung des Tanks ausströmende Luft dargestellt ist. Die Ringschulter 29 ist wiederum vom ersten Leitelement 33 für den Luftstrom ringförmig umschlossen, welches hier beispielsweise als rohrförmige Struktur realisiert ist, deren stirnseitige Schnittfläche mit 33' gekennzeichnet ist. Der radial davon außerhalb liegend dargestellte Ring 33'' ergibt sich durch die konusförmige Ausbildung und des Leitelementes 33 und stellt dessen Außenfläche in Draufsicht dar. Die segmentartig dargestellten Bereiche 38 symbolisieren beispielhaft die siebartigen Auslässe 38 aus der Filterkammer 11 hin zu dem durch den Anschluss 6 realisierten Wasserauslass der Wasserfilterpatrone 1. Die segmentartigen Darstellungen mit der Nummer 39 stellen nichtdurchlässige Bereiche der diesbezüglichen Struktur des Wasserfilters 1 dar.

Mittels der vom Stößel 23 radial auswärts gerichtet angeordneten Rippen 37 kann der Stößel 23 seitlich abgestützt und damit beim Zustandswechsel des Ventils 15 von "geschlossen" in "offen", bzw. umgekehrt, geführt werden. Und/oder die Abblasöffnung 28 in Strömungsrichtung seitlich begrenzt werden (siehe Figur 1, 3).

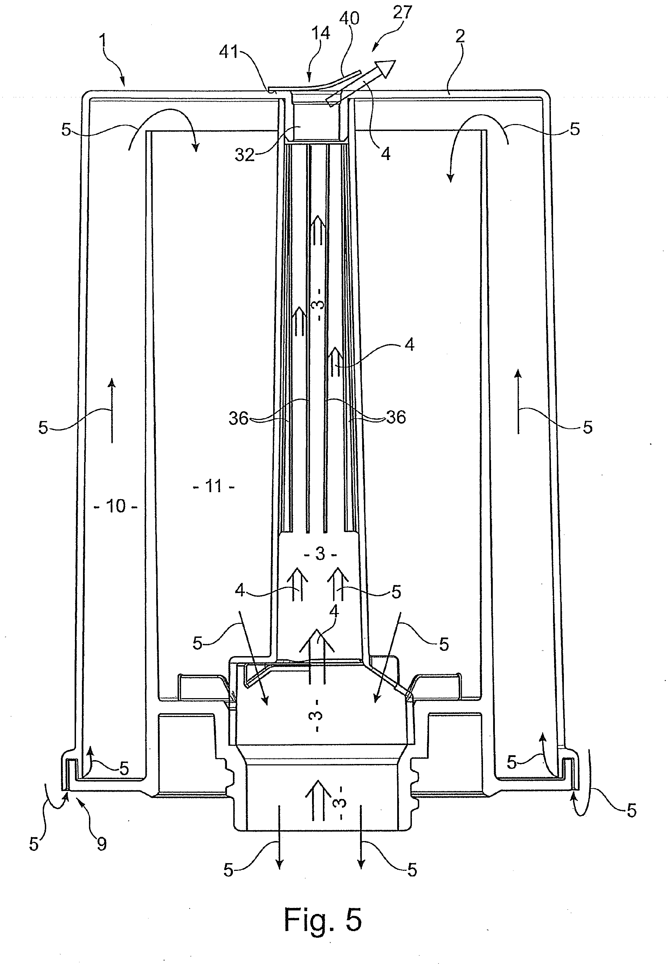

Die Figur 5 zeigt eine Wasserfilterpatrone 1 mit einer alternativen Ausführungsform eines Absperrmittels 14 in der Form einer Membran 40. Diese ist beispielhaft über eine Fixierung 41 mit der Außenseite des Gehäuses 2 verbunden. Zur Visualisierung der Entlüftungsfunktion des Strömungspfades 3 für Luft 4 zur Belüftung eines von der Wasserfilterpatrone aufzubereitenden Wasser bevorratenden Wassertanks ist die Membran 40 an der der Fixierung 41 gegenüberliegenden Seite angehoben dargestellt. Ein zwischen der Membran 40 und dem Gehäuse 2 eingezeichneter Pfeil symbolisiert den Austritt von Luft aus dem Strömungspfad 3.

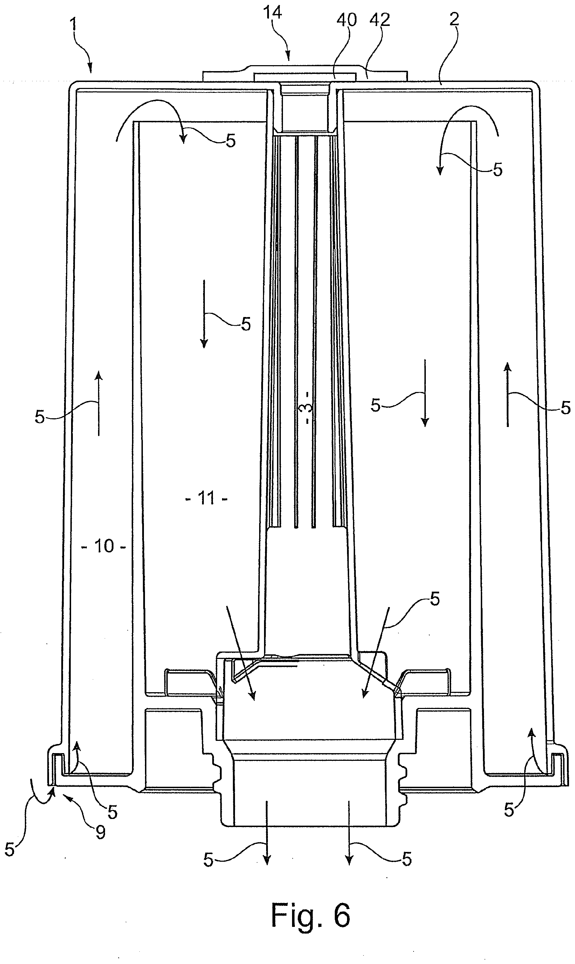

In der Figur 6 ist die gleiche Ausführungsform wie in Figur 5 dargestellt gezeigt, jedoch mit geschlossenem Absperrmittel 14 in der Form einer Membran 40, die rundum abdichtend auf der Außenseite des Gehäuses der Wasserfilterpatrone 1 aufliegt. Zusätzlich ist hier ein Sicherungsmittel in der Form einer Sicherung 42 vorgesehen. Dies kann beispielsweise in der Form einer Klebefolie realisiert sein, welche insbesondere bevorzugt die Membran 40 vollständig überdeckend mit dem Gehäuse 2 verbunden ist. Damit kann ein zusätzlicher Schutz zur Abdichtung des Strömungspfades 3 zur Verfügung gestellt werden, für den Anwendungsfall in welcher die Wasserfilterpatrone in einem hydraulisch oben offenen Wassertank eingesetzt werden kann. Zur Verwendung der Wasserfilterpatrone 1 in einem nach dem "Vogeltränke-Prinzip" arbeitenden, hydraulisch geschlossenen Wassertank kann die Sicherung 42 entfernt werden. Dann funktioniert die Wasserfilterpatrone 1 wie in Figur 5 dargestellt.

Zur Erläuterung der Betriebsweisen zeigt die Figur 7 eine Ausführung eines hydraulisch mit Ausnahme der Auslassöffnung vollkommen geschlossenen Wassertanks 43. Die Belüftung dieses Wassertanks 43 erfolgt gemäß dem "Vogeltränke-Prinzip" durch Zufuhr von Luft 4 entsprechend der dargestellten Pfeile durch den Strömungspfad 3 in der im Inneren des Wassertanks 43 eingesetzten Wasserfilterpatrone 1. Aus Gründen der Übersichtlichkeit wurden sowohl Tank als auch Wasserfilterpatrone lediglich schematisch mit den wesentlichen Aspekten bezüglich Führung der Luft und des aufzubereitenden Wassers dargestellt.

Im Unterschied zu der Ausführungsform des Wassertanks 43 in der Figur 7 ist in der Figur 8 der Wassertank 44 hydraulisch offen und daher symbolisch oben ohne Deckel oder dergleichen dargestellt. Die Absperrmittel 14 in der Wasserfilterpatrone 1 sind hier im geschlossenen Zustand gezeigt, auch hier wiederum der einfacheren Darstellung halber nur symbolisch. Der Wasserstrom des im Tank 44 vorgehaltenen Wassers 5 kann auch in diesem zweiten Betriebsfall nur über die im Inneren der Wasserfilterpatrone 1 angeordneten Filterstrecke in der Form der Filterkammern 10, 11 fließen, da insbesondere eine Durchführung durch den Strömungspfad 3 für Luft und Belüftung eines geschlossenen Wassertanks durch die Absperrmittel 14 verschlossen ist. Bei entsprechender Abnahme von Wasser 5 am Auslass des Wassertanks 44 kann das darin vorgehaltene Wasser 5 problemlos nachfließen, da Luft 4 von außen durch den nicht verschlossenen Tank 44 in diesen eindringen kann und so kein rückhaltendes Vakuum im Inneren des Tanks entstehen kann.

Damit kann die erfindungsgemäße Wasserfilterpatrone 1 wahlweise für einen nach dem "Vogeltränke-Prinzip" arbeitenden, hydraulisch geschlossenen Wassertank 43 entsprechend des Beispiels in Figur 7 betrieben werden, als auch bei aktiviertem Absperrmittel 14, und somit geschlossenem Strömungspfad 3 - für einen hydraulisch offenen Wassertank 44 für die zweite Betriebsweise.

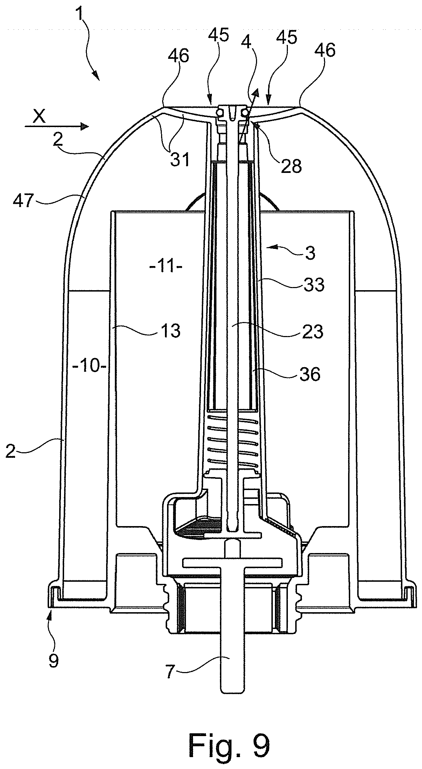

Die Figur 9 zeigt beispielhaft und schematisch eine Querschnittsdarstellung einer gegenüber den Figuren 1-3 abgeänderten Ausführung einer Wasserfilterpatrone 1. Diese weist im stirnseitigen Kopfbereich des Gehäuses 2 eine Einbuchtung 45 auf, z.B. in der Form eines Kraters, und schließt mit einem Einbuchtungsrand 46 in axialer Gehäuseerstreckung ab. Die Einbuchtung 45 bildet eine sogenannte "Luftfalle". In dieser kann sich, bei geöffnetem Durchlass für die Luft 4 zur Belüftung des Wassertanks, in der Form von kleinen Luftblasen austretende Luft solange zu einer großen Blase ansammeln, bis diese eine entsprechend größere Auftriebskraft erfährt als die Haftkraft durch Adhäsion an der Außenseite der Wasserfilterpatrone und dem auf die Grenzschicht des Wassertropfens drückenden Wasserdruck. Hierdurch kann eine zusätzliche Dichtwirkung gegen nicht betriebsgemäßes Eindringen von zu filterndem Wasser in die Wasserfilterpatrone und damit gegen deren Kurzschluss bereitgestellt werden.

Mittels einer vom Einbuchtungsrand 46 zu einem hülsenförmigen, z.B. zylindrischen Abschnitt des Gehäuses 2 an dessen Außenseite übergehenden Abrundung 47 kann eine Vergrößerung des nutzbaren Tankvolumens durch die entsprechende Reduzierung des Filterpatronen-Außenvolumens erzielt werden. Zusätzlich kann hierdurch eine Montagehilfe auf Grund verbesserter ergonomischer Eigenschaften beim Halten der Wasserfilterpatrone bereitgestellt werden.

Der die Einbuchtung umgebende Einbuchtungsrand 46 bewirkt im Weiteren einen mechanischen Schutz der Dichtmittel für die Belüftungsluft 4. Zumindest gegen die Einwirkung flacher Gegenstände. So bleiben bspw. bei versehentlichem Fallenlassen der Patrone auch bei einem geöffnetem Ventil und dabei vorstehendem Ventilstößel beim Auftreffen der Wasserfilterpatrone auf z.B. eine Tischfläche oder dem Boden die Dichtmittel geschützt.

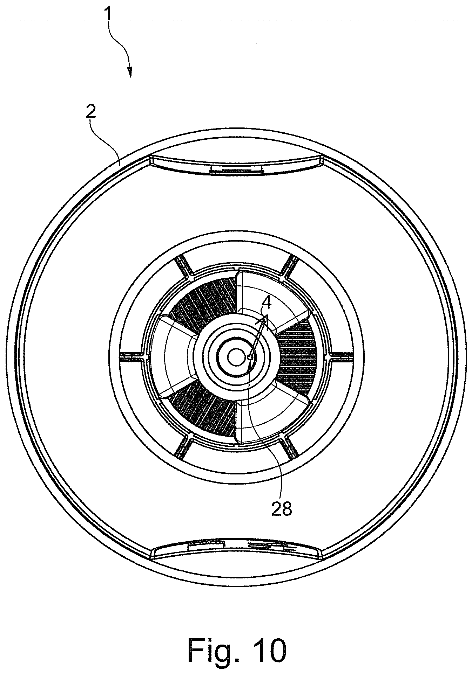

Die Figur 10 zeigt eine Draufsicht auf eine Wasserfilterpatrone gemäß Darstellung der Figur 9 in der Schnitthöhe "X". Die äußere Umrandung stellt das Gehäuse 2 der Wasserfilterpatrone 1 dar. Zentral in der Mitte ist die Abblasöffnung 28 dargestellt, aus welcher symbolisch ein Doppelpfeil 4 für die den Wassertank im Betriebsfall belüftende Luft führt.

Die übrigen gezeigten Elemente entsprechen sinngemäß denen in der Darstellung der Figur 4. Auch die in der Figur 9 zusätzlich dargestellten Bezugszeichen entsprechen den in den Figuren 1-3 dargestellten Merkmalen.

### Bezugszeichenliste:

- 1: Wasserfilterpatrone
- 2: Gehäuse
- 3: Strömungspfad
- 4: Luft
- 5: Wasser
- 6: Anschluss
- 7: Tankverschluss
- 8: Dichtung
- 9: Einlassöffnung
- 10: Filterkammer
- 11: Filterkammer
- 12: Filtermedium
- 13: Trennwand
- 14: Absperrmittel
- 15: Ventil
- 16: Ventilsitz
- 17: Ventilkörper
- 18: Dichtung
- 19: Sicherungsmittel
- 20: Rückstellmittel
- 21: Öffnungsmittel
- 22: mechanische Struktur
- 23: Stößel
- 24: Stirnseite
- 25: Stößelschulter
- 26: Lager
- 27: erste Wassersperre
- 28: Abblasöffnung
- 29: Ringschulter
- 30: Hülse
- 31: Deckel
- 32: Luftsammelkammer
- 33: erstes Leitelement für Luft
- 33': Schnittfläche
- 33'': Ring
- 34: zweite Wassersperre
- 35: Verengung
- 36: zweites Leitelement für Wasser
- 37: Rippe
- 38: Sieb
- 39: Abdeckung
- 40: Membran
- 41: Fixierung
- 42: Sicherung
- 43: Wassertank (hydraulisch geschlossen)
- 44: Wassertank (hydraulisch offen)
- 45: Einbuchtung
- 46: Einbuchtungsrand
- 47: Abrundung

## Patentansprüche

1. Wasserfilterpatrone (1), mit einem Gehäuse (2), einem Fließweg (9, 10, 11, 6) für durch die Wasserfilterpatrone aufzubereitendes Wasser (5) und einem Strömungspfad (3) für Luft (4) zur Belüftung eines die Wasserfilterpatrone speisenden, das Wasser bevorratenden Wassertanks, wobei Absperrmittel (14) für den Strömungspfad (3) für Luft (4) vorgesehen sind, **dadurch gekennzeichnet, dass** der für den Durchfluss des aufzubereitenden Wassers vorgesehene Fließweg (9, 10, 11, 6) von einer Einflussnahme auf den Strömungspfad (3) für Luft (4), durch öffnen oder schließen der Absperrmittel (14), unberührt ist, so dass die Wasserfilterpatrone sowohl in einem hydraulisch geschlossenen als auch in einem hydraulisch offenen Wassertank funktionstüchtig betreibbar ist.

2. Wasserfilterpatrone nach Anspruch 1, **dadurch gekennzeichnet, dass** die Absperrmittel (14) in der Form eines Ventils (15) ausgebildet sind.

3. Wasserfilterpatrone nach Anspruch 1, **dadurch gekennzeichnet, dass** die Absperrmittel (14) in der Form einer Membran ausgebildet sind.

4. Wasserfilterpatrone nach Anspruch 1 bis 3, **dadurch gekennzeichnet, dass** Sicherungsmittel (19) und/oder Rückstellmittel (20) für die Absperrmittel (14) ausgebildet sind.

5. Wasserfilterpatrone nach Anspruch 4, **dadurch gekennzeichnet, dass** die Sicherungsmittel (19) und/oder Rückstellmittel (20) elastische Eigenschaften aufweisen.

6. Wasserfilterpatrone nach Anspruch 5, **dadurch gekennzeichnet, dass** die Sicherungsmittel (19) und/oder Rückstellmittel (20) ein Federelement umfassen.

7. Wasserfilterpatrone nach einem der Ansprüche 1 bis 6, **dadurch gekennzeichnet, dass** Öffnungsmittel (21) für die Absperrmittel (14) vorgesehen sind, und/oder dass die Absperrmittel (14) über tankseitige Öffnungsmittel (21), insbesondere über tankverschlussseitige Öffnungsmittel oder Öffnungsmittel am Patronenanschlussteil öffenbar sind.

8. Wasserfilterpatrone nach Anspruch 7, **dadurch gekennzeichnet, dass** die Öffnungsmittel (21) in der Form einer mechanisch Druck übertragenden Struktur (22) ausgebildet sind.

9. Wasserfilterpatrone nach Anspruch 8, **dadurch gekennzeichnet, dass** die Öffnungsmittel (21) in der Form eines Stößels (23) ausgebildet sind.

10. Wasserfilterpatrone nach einem der vorangehenden Ansprüche, **dadurch gekennzeichnet, dass** der Strömungspfad (3) eine erste Wassersperre (27) aufweist, vorzugsweise in der Form einer Abblasöffnung (28), welche insbesondere bevorzugt eine lichte Weite < 6 mm und > 0,5 mm aufweist, insbesondere 1 mm ± 0,25 mm.

11. Wasserfilterpatrone nach Anspruch 10, **dadurch gekennzeichnet, dass** die erste Wassersperre (27) eine Luftsammelkammer (32) umfasst, die bevorzugt eine ringförmig ausgebildete Querschnittsstruktur aufweist.

12. Wasserfilterpatrone nach einem der vorangehenden Ansprüche, **dadurch gekennzeichnet, dass** der Strömungspfad (3) ein erstes Leitelement (33) zur Leitung der Luft (4) umfasst, bevorzugt in der Form einer rohrartigen Struktur, welche insbesondere bevorzugt entlang des Strömungspfades einen konisch ausgebildeten Abschnitt aufweist.

13. Wasserfilterpatrone nach einem der Ansprüche 10 oder 11, **dadurch gekennzeichnet, dass** der Strömungspfad (3) eine zweite Wassersperre (34) aufweist, vorzugsweise in Form eines Abschnitts des Strömungspfades, welcher gegenüber einem im Betriebsfall in Strömungsrichtung davor ausgebildeten Abschnitt des Strömungspfades einen sprungartig reduzierten Leitungsquerschnitt aufweist.

14. Wasserfilterpatrone nach einem der vorangehenden Ansprüche, **dadurch gekennzeichnet, dass** die Absperrmittel für den Strömungspfad für Luft dazu ausgebildet sind, beim Anschluss der Wasserfilterpatrone an den Tank deaktiviert zu werden.

15. Wasserfilterpatrone nach einem der vorangehenden Ansprüche, **dadurch gekennzeichnet, dass** das Absperrmittel dazu ausgebildet ist, über eine mechanisch Druck übertragende Struktur beim Anschließen der Wasserfilterpatrone an den Wassertank geöffnet zu werden.

## Claims

1. A water filter cartridge (1) with a housing (2), a flow path (9, 10, 11, 6) for water (5) to be processed by the water filter cartridge and a flow passage (3) for air (4) for ventilating a water tank that feeds the water filter cartridge and which stores the water, wherein stopping means (14) are provided for the flow passage (3) for air (4), **characterized in that** the flow path (9, 10, 11, 6) provided for the flow of the water to be processed is unaffected by an influence on the flow passage (3) for air (4) by opening or closing the stopping means (14), so that the water filter cartridge can be operated with all functions both in a hydraulically closed and a hydraulically open water tank.

2. The water filter cartridge according to Claim 1, **characterized in that** the stopping means (14) are configured in the form of a valve (15).

3. The water filter cartridge according to Claim 1, **characterized in that** the stopping means (14) are configured in the form of a membrane.

4. The water filter cartridge according to Claim 1 to 3, **characterized in that** securing means (19) and/or resetting means (20) are configured for the stopping means (14).

5. The water filter cartridge according to Claim 4, **characterized in that** the securing means (19) and/or resetting means (20) have elastic properties.

6. The water filter cartridge according to Claim 5, **characterized in that** the securing means (19) and/or resetting means (20) comprise a spring element.

7. The water filter cartridge according to any one of Claims 1 to 6, **characterized in that** opening means (21) are provided for the stopping means (14), and/or **in that** the stopping means (14) can be opened via opening means (21) on the tank side, in particular via opening means on the tank closure side or opening means on the cartridge connection part.

8. The water filter cartridge according to Claim 7, **characterized in that** the opening means (21) are configured in the form of a mechanical pressure transfer structure (22).

9. The water filter cartridge according to Claim 8, **characterized in that** the opening means (21) are configured in the form of a plunger (23).

10. The water filter cartridge according to any one of the preceding claims, **characterized in that** the flow passage (3) has a first water stop (27), preferably in the form of a blow-off vent (28), which in a particularly preferred manner has a clear width of < 6 mm and > 0.5 mm, in particular, 1 mm ± 0.25 mm.

11. The water filter cartridge according to Claim 10, **characterized in that** the first water stop (27) comprises an air collection chamber (32), which preferably has an annular profile structure.

12. The water filter cartridge according to any one of the preceding claims, **characterized in that** the flow passage (3) comprises a first guide element (33) for guiding the air (4), preferably in the form of a tubular structure, which in a particularly preferred manner has a conically configured section along the flow passage.

13. The water filter cartridge according to one of Claims 10 or 11, **characterized in that** the flow passage (3) has a second water stop (34), preferably in the form of a second section of the flow passage, which has an abruptly reduced line profile in relation to a section of the flow passage configured in the flow direction during operation.

14. The water filter cartridge according to any one of the preceding claims, **characterized in that** the stopping means for the flow passage for air are configured to be deactivated when the water filter cartridge is connected to the tank.

15. The water filter cartridge according to any one of the preceding claims, **characterized in that** the stopping means are configured to be opened via a mechanical pressure transfer structure when the water filter cartridge is connected to the water tank.

## Revendications

1. Cartouche de filtre à eau (1), comprenant un boîtier (2), un chemin d'écoulement (9, 10, 11, 6) pour l'eau (5) à traiter par la cartouche de filtre à eau et un trajet d'écoulement (3) pour l'air (4) destiné à la ventilation d'un réservoir d'eau, stockant l'eau et alimentant la cartouche de filtre à eau, dans laquelle des moyens d'arrêt (14) sont situés pour le trajet d'écoulement (3) pour l'air (4), **caractérisée en ce que** ledit chemin d'écoulement (9, 10, 11, 6) destiné à l'écoulement de l'eau à traiter n'est pas influencé sur le trajet d'écoulement (3) pour l'air (4) par ouverture ou arrêt des moyens d'arrêt (14) de telle sorte que la cartouche de filtre à eau peut fonctionner dans un réservoir d'eau fermé de manière hydraulique ainsi que dans un réservoir d'eau ouvert de manière hydraulique.

2. Cartouche de filtre à eau selon la revendication 1, **caractérisée en ce que** les moyens d'arrêt (14) sont conçus sous la forme d'une vanne (15).

3. Cartouche de filtre à eau selon la revendication 1, **caractérisée en ce que** les moyens d'arrêt (14) sont conçus sous la forme d'une membrane.

4. Cartouche de filtre à eau selon les revendications 1 à 3, **caractérisée en ce que** des moyens de fixation (19) et/ou des moyens de rappel (20) sont conçus pour les moyens d'arrêt (14).

5. Cartouche de filtre à eau selon la revendication 4, **caractérisée en ce que** les moyens de fixation (19) et/ou les moyens de rappel (20) présentent des propriétés élastiques.

6. Cartouche de filtre à eau selon la revendication 5, **caractérisée en ce que** les moyens de fixation (19) et/ou les moyens de rappel (20) comprennent un élément ressort.

7. Cartouche de filtre à eau selon l'une quelconque des revendications 1 à 6, **caractérisée en ce que** des moyens d'ouverture (21) sont situés pour les moyens d'arrêt (14) et/ou **en ce que** les moyens d'arrêt (14) peuvent être ouverts par l'intermédiaire des moyens d'ouverture (21) côté réservoir, en particulier par l'intermédiaire des moyens d'ouverture côté arrêt du réservoir ou des moyens d'ouverture sur la partie de raccordement de la cartouche.

8. Cartouche de filtre à eau selon la revendication 7, **caractérisée en ce que** les moyens d'ouverture (21) sont conçus sous la forme d'une structure (22) transmettant une pression mécanique.

9. Cartouche de filtre à eau selon la revendication 8, **caractérisée en ce que** les moyens d'ouverture (21) sont conçus sous la forme d'un poussoir (23).

10. Cartouche de filtre à eau selon l'une quelconque des revendications précédentes, **caractérisée en ce que** le trajet d'écoulement (3) comporte une première barrière à l'eau (27), de préférence sous la forme d'une ouverture d'échappement (28), laquelle, de manière particulièrement préférée présente une largeur intérieure de < 6 mm et > 0,5 mm , en particulier de 1 mm ± 0,25 mm.

11. Cartouche de filtre à eau selon la revendication 10, **caractérisée en ce que** la première barrière à l'eau (27) comprend une chambre de collecte d'air (32), laquelle, de préférence comporte une structure transversale annulaire.

12. Cartouche de filtre à eau selon l'une quelconque des revendications précédentes, **caractérisée en ce que** le trajet d'écoulement (3) comprend un premier élément de guidage (33) pour guider l'air (4), de préférence sous la forme d'une structure tubulaire, laquelle, de manière particulièrement préférée comporte le long du trajet d'écoulement une section conique.

13. Cartouche de filtre à eau selon l'une quelconque des revendications 10 ou 11, **caractérisée en ce que** le trajet d'écoulement (3) comporte une seconde barrière à l'eau (34), de préférence sous la forme d'une section du trajet d'écoulement, laquelle comporte une section transversale de guidage brusquement réduite par rapport à une section du trajet d'écoulement conçue en amont dans la direction d'écoulement en cas de fonctionnement.

14. Cartouche de filtre à eau selon l'une quelconque des revendications précédentes, **caractérisée en ce que** les moyens d'arrêt du trajet d'écoulement pour l'air sont conçus pour être désactivés lord du raccordement de la cartouche de filtre à eau au réservoir.

15. Cartouche de filtre à eau selon l'une quelconque des revendications précédentes, **caractérisée en ce que** le moyen d'arrêt est conçu pour être ouvert au moyen d'une structure transmettant une pression mécanique lord du raccordement de la cartouche de filtre à eau au réservoir d'eau.
